# EUROPEAN PATENT SPECIFICATION

(11) **EP 1 700 785 B1**
(45) Date of publication and mention of the grant of the patent: **12.12.2007**
(21) Application number: 06250668.8
(22) Date of filing: 08.02.2006
(51) Int. Cl.: B64G 1/28, G05D 1/08, B64G 1/42

(54) **Use of turbomachinery for space vehicle momentum management**
Verwendung von Turbomaschinen für die Impulsregelung eines Raumfahrzeuges
Utilisation d'une turbomachine pour la gestion du moment cinétique d'un véhicule spatial

(30) Priority: 07.03.2005 US 74976
(43) Date of publication of application: 13.09.2006
(73) Proprietor: NORTHROP GRUMMAN CORPORATION, Los Angeles, CA 90067-2199 (US)
(72) Inventor: Rudd, Lael vonEggers, Redondo Beach, CA 90277 (US); Morgowicz, Bernard, Manhattan Beach, CA 90266 (US)
(74) Representative: Mackenzie, Andrew Bryan

(56) References cited:
- US-B1- 6 439 510
- PIERONEK T J ET AL: "Spacecraft flywheel systems-benefits, and issues" AEROSPACE AND ELECTRONICS CONFERENCE, 1997. NAECON 1997., PROCEEDINGS OF THE IEEE 1997 NATIONAL DAYTON, OH, USA 14-17 JULY 1997, NEW YORK, NY, USA,IEEE, US, vol. 2, 14 July 1997 (1997-07-14), pages 589-593, XP010242879 ISBN: 0-7803-3725-5

## Description

### BACKGROUND OF THE INVENTION

This invention relates generally to techniques for controlling spacecraft and, more particularly, to techniques for controlling spacecraft orientation and angular momentum. The control of angular orientation is, of course, an important aspect of the design of any space vehicle, since precise orientation is needed for propulsion of the vehicle in a desired direction, as well as for pointing communication antennas, scientific observation equipment, navigation equipment and, in many cases, solar panels. Rotation of the vehicle about a desired axis is conventionally achieved either by external means, such as small thrusters (rocket engines that burn solid or liquid propellants), or by internal means, such as by momentum exchange with a rotating flywheel. In vehicles orbiting the earth, other external means available include magnetic torque rods, which rotate a spacecraft by making use of the earth's magnetic field.

For spacecraft on missions far from the earth, basically the only practical orientation control techniques available are thrusters and rotating flywheels. Thrusters, of course, consume fuel, which limits their long-term use, but they may also be undesirable for other reasons. The products of combustion emitted by attitude control thrusters constitute a significant contaminant that could invalidate scientific observations of planets or their satellites. Therefore, for interplanetary scientific missions momentum exchange with rotating flywheels may well become the preferred approach for the control of angular momentum of spacecraft. The principle of momentum exchange using rotating flywheels is well known to spacecraft designers. A flywheel that is stationary has no effect on the spacecraft. A flywheel that is spinning at a constant angular velocity will cause the spacecraft to resist any perturbations to its attitude. But if the flywheel is accelerated or decelerated, most of this change in angular momentum will be transferred to the spacecraft, as a result of the principle of conservation of momentum and will cause the spacecraft attitude to change. The degree to which an accelerating flywheel affects the angular momentum of the spacecraft depends, of course, on the relative inertias of the flywheel and the spacecraft.

Momentum exchange using rotating flywheels allows for more precise attitude control than using thrusters and avoids the emission of products of combustion. The principle drawback to flywheels for angular position control is that each flywheel requires energy to keep it rotating and for acceleration and deceleration. Moreover, the flywheel mass must be carried by the spacecraft wherever it goes, resulting in increased fuel consumption. In a sense, each flywheel is "dead weight" in the spacecraft except when it performs its desired function of changing the spacecraft angular rates.
One example of a system for managing electrical energy and for controlling attitude of a satellite is disclosed by Barde (U.S. Patent No. 6,439,510). The system has an attitude control unit which controls a plurality of reaction wheels oriented about different axes for instance three wheels. An on-board electricity power supply network has a solar array, a payload and a storage unit connected to a power line. The storage unit comprises a buffer supercapacitor and one inertia wheel unit with a respective motor/generator and typically two contra-rotating wheels. Another example of a spacecraft flywheel system is disclosed by Pieronek et al. ("Spacecraft Flywheel Systems- Benefits and Issues." Aerospace and Electronics Conference, 1997. NAECON 1997, Proceedings of the IEEE 1997 National Dayton, OH, USA 14-17 July 1997, New York, NY, USA, IEEE, US, vol. 2., pages 589-593).

It will be appreciated from the foregoing that there is a need for an improved technique for attitude control that preserves the advantages of rotating flywheels but without the mass penalty and fuel cost associated with flywheels. The present invention satisfies this need.

### SUMMARY OF THE INVENTION

The present invention resides in a method for utilizing rotating machinery for attitude control of a vehicle, such as a spacecraft. In accordance with an aspect of the present invention there is provided a method for controlling vehicle attitude as recited in Claim 1. In accordance with another aspect of the present invention there is provided apparatus as recited in Claim 9. More specifically, the method of the invention controls vehicle attitude using rotating machinery that has a different principal function. Briefly, and in general terms, the method of the invention comprises rotating machinery about an axis of the vehicle at a speed of rotation needed to perform a principal function for the vehicle; changing the speed of rotation of the machinery; and as a result of changing the speed of rotation of the machinery, exchanging momentum with the vehicle and inducing an angular movement of the vehicle about the same axis.

In the disclosed embodiments of the invention, the vehicle is a spacecraft, but the invention is equally applicable to other vehicles, such as submarine vehicles and aircraft. As also shown in the disclosed embodiments of the invention the principal function of the rotating step is generating electrical power for the vehicle, but it will be appreciated that the rotating machinery may be used for a different function, such as vehicle propulsion without generation of electrical power.

More specifically, the method further comprises sensing angular position and rate of the vehicle about the axis; and determining a speed of rotation change needed to induce a desired angular movement of the vehicle. The method may further comprise varying the electrical load coupled to the rotating machinery to maintain a desired electrical output while the step of changing the speed for rotation takes place. The step of varying electrical load may further comprise increasing the electrical load and dissipating energy pertaining to excess electrical load as heat.

In accordance with an alternate embodiment of the invention, the step of rotating machinery comprises rotating a first set of machinery in one direction and rotating a second set of machinery in an opposite direction. The step of changing the speed of rotation in this embodiment comprises changing the speed of one of the sets of machinery relative to the speed of rotation of the other set of machinery thereby changing the momentum state of the rotating machinery away from zero and creating an opposite polarity momentum on the vehicle with an accompanying rotation rate such that the sum of the two components of angular momentum continues to equal to zero.

It will be appreciated from the foregoing that the present invention represents a significant advance in attitude control for spacecraft and analogous vehicles. In particular, the invention utilizes rotating machinery used for the purpose of exchanging momentum with the vehicle and thereby controlling its attitude about one or more axes. Other aspects and advantages of the invention will become apparent from the following more detailed description, taken in conjunction with the accompanying drawings.

### BRIEF DESCRIPTION OF THE DRAWINGS

FIG. 1 is a block diagram for a system of spacecraft attitude control using turbomachinery whose primary function is the generation of electrical power.

FIG. 2 is a block diagram similar to FIG. 1, but showing an alternate embodiment of the invention.

### DETAILED DESCRIPTION OF THE INVENTION

As shown in the drawings for purposes of illustration, the present invention pertains to techniques for attitude control of a spacecraft or, more generally of any vehicle in which the use of external attitude control devices is impractical or undesirable. As explained above, the use of rotating flywheels for attitude control has the drawback that flywheel mass must be carried in the vehicle at all times, and additional energy is expended in spinning the flywheels. Although attitude control may be effected by external means, such as by thrusters, for some spacecraft missions the use of chemical thruster rocket engines may not be undesirable for various reasons.

In accordance with the present invention, any vehicle having rotating turbomachinery may be controlled in attitude by varying the rotational speed of the turbomachinery. While the invention is described in the context of a spacecraft, it will be appreciated that the principles of the invention also apply to certain types of aircraft and underwater vehicles. The only requirement is that the vehicle must have onboard rotating machinery used for another purpose, such as power generation or to provide forward thrust to the vehicle.

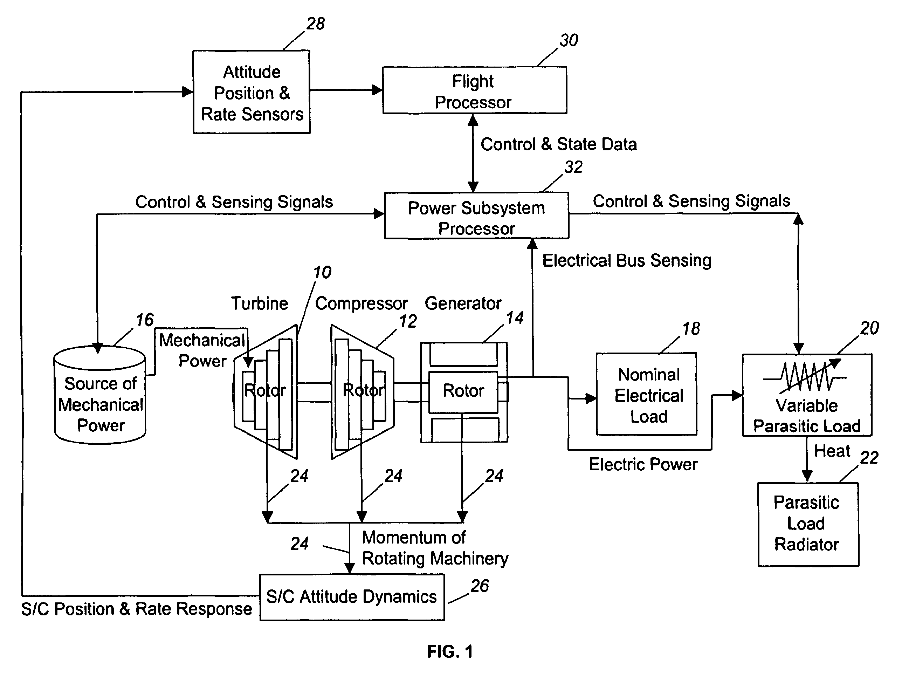

In the context of a spacecraft, turbo-generators may be used to supply electrical power for missions in which solar power is insufficient. For example, one proposed spacecraft mission will employ a nuclear fission reactor and associated turbomachinery to generate electrical power for propulsion. In this example, the nuclear reactor provides the energy needed to rotate the turbomachinery, by heating a fluid to sufficient temperatures and pressures to drive a turbine. The turbine is mechanically coupled to an electrical generator that generates the propulsive power. This arrangement is shown generally in FIG. 1, which depicts a turbine 10, a compressor 12, a generator 14 and a source of mechanical power 16, which may include a nuclear reactor and means for heating a fluid to power the turbine. The generator 14 provides power to an electrical load 18, which may provide propulsive power to the spacecraft, although that is not essential to the invention.

Because the rotating components of the turbine 10, compressor 12 and generator 14 are used for angular momentum control as well as for electrical power generation, the turbomachinery must be controlled with this dual use in mind. In particular, the spin speed of the turbomachinery is typically controlled to be normally lower than the maximum spin speed, to provide a dynamic range over which spin speed adjustments may be made to exchange angular momentum with the spacecraft. In some situations, increasing the spin speed for a desired angular momentum exchange will result in the generation of more power than is consumed by the nominal power load 18. For the invention to operate as desired, a variable parasitic load 20 is provided, to absorb excess generated power. This excess power is radiated as heat from a parasitic load radiator 22.

The principal components needed for control of attitude and electrical power are also shown in FIG. 1. As indicated diagrammatically by the arrows 24, changes in angular momentum of the rotating portions of the turbine 10, compressor 12 and generator 13 are transferred to spacecraft attitude dynamics 26. Angular position, and rate sensors, indicated by block 28, provide signals to a flight processor 30, which is part of the spacecraft's overall navigation and control system. The flight processor 30 receives state data signals from a power subsystem processor 32 and transmits control signals to the power subsystem processor to achieve a desired change in attitude position and rate of change of attitude, with respect to the axis of the turbomachinery.

The power subsystem processor 32 receives status signals from the source of mechanical power 16, the output of the generator 14 and from the variable parasitic load 20, and transmits control signals to the source of mechanical power 16 and the variable parasitic load 20. It is well understood that a rotating generator will output a voltage that varies with the spin speed of the generator. In other words, if the spin speed is increased the output voltage will increase and, if there is no change in the electrical load conditions, a higher power will be supplied to the load. Most electrical loads have a requirement that the voltage be regulated to remain at a fixed level or at least to remain within a fixed narrow range. If the spin speed must be increased for attitude control purposes, the output voltage can be maintained near constant by increasing the electrical load. Therefore, one of the functions of the power subsystem processor 32 is to increase the variable parasitic load 20 at the same time the input mechanical power and the spin speed are increased. In performing this function, the power subsystem processor 32 senses the output voltage of the generator 14, controls the mechanical input power as commanded by the flight processor 30 to achieve a momentum change, and controls the variable parasitic load 20 to maintain the generator output constant within given limits.

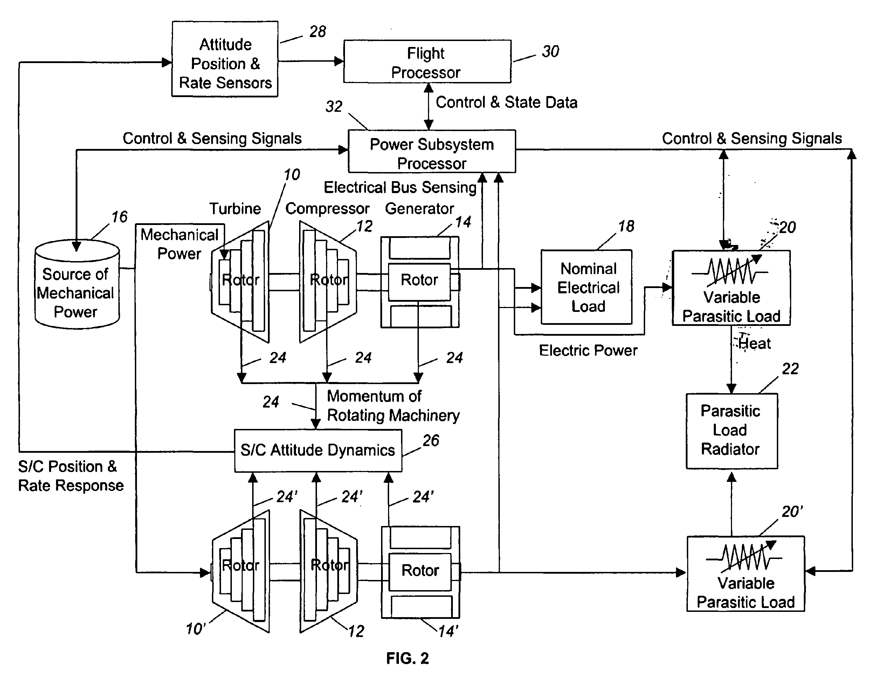

A variation of the configuration of FIG. 1 is to employ two sets of turbomachinery aligned on a common axis of rotation but designed to rotate in opposite directions. This is depicted diagrammatically in FIG. 2, where the additional turbomachinery is shown to include a second turbine 10'. A second compressor 12' and a second generator 14'. In this configuration, the power subsystem processor 32 controls input power to both turbines 10 and 10', and an additional variable parasitic load 20' is needed to control the electrical output of the second generator 14'. The electrical outputs of the two sets of turbogenerators can be conveniently combined to share the electrical load 18 in any desired proportion. The advantage of having two counter-rotating turbo-generators is that they can be controlled to operate in a mode in which they run at identical spin speeds. Therefore, any momentum exchange as the spin speeds of the two machines are increased or decreased together would add to zero. In this mode of operation, the generators could be run at any desired spin speed, which could be adjusted to meet electrical load conditions without any net exchange of angular momentum with the spacecraft. When momentum exchange is needed to rotate the spacecraft to a desired pointing angle, or to compensate for external momentum effects, the two turbogenerators are operated in a different mode, with a spin speed differential, or more precisely, with a difference in angular acceleration that results in a net momentum exchange with the spacecraft.

Use of two counter-rotating sets of turbomachinery may also be used to cancel rotational torque induced in the spacecraft when spin speeds are not changing. Mechanical torque is applied to the turbine 10 in FIG. 1 to rotate the rotor of the generator 14 and thereby generate electrical power. For low powers, the input mechanical torque is correspondingly low and for higher generated powers the input mechanical torque is, of course, higher. In the generator 14, part of the mechanical input torque will be coupled from the generator rotor to the generator stator, and unless the stator is restrained from moving, the stator will tend to be moved with the rotor, inducing unwanted rotation in the spacecraft. In a system with two counter-rotating turbo-generators that share the electrical load equally, oppositely applied mechanical input torques will cancel and will not, therefore, induce any rotation in the spacecraft.

For control of spacecraft attitude about three axes using momentum exchange with turbomachinery, at least one additional set of turbomachinery canted between a second and third axis forming an orthogonal set of three spacecraft body axes is required. With this arrangement a combined control of attitude about two axes can be achieved by modulating the spin speed of the canted turbomachinery while preserving independent attitude control on the first axis with the aligned set. Various combinations of two sets of turbomachinery orientations with respect to the three vehicle axes would yield differently coupled attitude control strategies. In the most general embodiment, to provide independent control of three axes of attitude three sets of orthogonally oriented rotating machinery would need to be provided.

The total degree of momentum control that can be obtained with the method of the invention is dependent on certain characteristics of the electrical subsystem. Specifically, the spin speed adjustments have to fall within a narrow range such that sufficient spacecraft power generation is ensured. The maximum spin speed demanded by the control approach cannot exceed the power dissipation capability of the load radiator 22 and any overspeed protection features of the turbomachinery. Similarly, at the lower limit the momentum exchange cannot cause the turbomachinery to spin below its compressor stall limits, which are dictated by the aerodynamics of the compressor blade design.

The use of turbo-generator machinery for attitude control results in the elimination of other means for attitude control, such as thruster motors or spinning flywheels that have no other purpose. This reduces vehicle mass and presents cost savings in hardware procurement and integration. Even if turbomachinery is used only to supplement more conventional attitude control techniques, there is a potential mass reduction and cost savings resulting from this augmentation of the conventional control techniques.

It will be appreciated from the foregoing that the present invention represents a significant advance in the field of spacecraft attitude control techniques. In particular, the present invention uses power generation turbomachinery for the additional purpose of spacecraft attitude control. Therefore, attitude control for spacecraft pointing, for navigation, or to compensate for externally induced angular momentum changes, is provided without the additional costs associated with the use of thruster rocket engines or rotating flywheels. Although specific embodiments of the invention have been illustrated and discussed in detail for purposes of illustration, it will be understood that the various modifications may be made without departing from the scope of the invention. Therefore, the invention should not be limited except as by the appended claims.

## Claims

1. A method for controlling vehicle attitude using rotating machinery (10, 12, 14) having a different principal function, the method comprising:
rotating machinery about an axis in the vehicle at a speed of rotation needed to generate electrical power for the vehicle;
changing the speed of rotation of the machinery; and
as a result of changing the speed of rotation of the machinery, exchanging momentum with the vehicle and inducing an angular movement of the vehicle about the same axis of the vehicle
the method **characterized by**;
varying electrical load (20) coupled to the rotating machinery to maintain a desired electrical output while the step of changing the speed for rotation takes place.

2. A method as defined in claim 1, wherein the step of rotating machinery comprises rotating turbomachinery about the axis in the vehicle at the speed of rotation to generate the electrical power for the vehicle.

3. A method as defined in claim 2, and further comprising:
sensing angular position and rate of the vehicle about the axis;
determining a speed of rotation change needed to induce a desired angular movement of the vehicle.

4. A method as defined in claim 3, and further comprising:
adjusting a mechanical input power (16) to the turbomachinery to cause the speed of rotation change.

5. A method as defined in claim 1, wherein the step of varying electrical load coupled to the rotating machinery comprises the step of controlling a variable parasitic load (20) to maintain the desired electrical output.

6. A method as defined in claim 5, and wherein the step of controlling the variable parasitic load comprises increasing the variable parasitic load and dissipating energy pertaining to excess electrical load as heat.

7. A method as defined in claim 1, wherein:
the step of rotating machinery comprises rotating a first set of machinery in one direction and rotating a second set of machinery in an opposite direction; and
the step of changing the speed of rotation comprises changing the speed of one of the sets of machinery relative to the speed of the other set of machinery.

8. A method as defined in claim 1, wherein the vehicle comprises a spacecraft.

9. An apparatus, comprising:machinery (10, 12, 14) configured to rotate about an axis to generate electrical power for a vehicle;
the apparatus comprising:
a flight processor (30) for attitude adjustment of the vehicle;
a power subsystem processor (32) coupled with the machinery and the flight processor;
wherein the flight processor is configured to transmit control signals to the power subsystem processor to cause a change in rotation of the machinery, wherein the change in rotation of the machinery causes a desired change in one or more of:
attitude position of the vehicle about the axis; and
rate of change of attitude position of the vehicle about the axis;
wherein the change in rotation of the machinery causes a change in electrical power provided by the machinery; **characterised by**
a variable parasitic load (20) configured to absorb excess electrical power from the machinery;
the power subsystem processor (32) coupled with the variable parasitic load;
wherein the power subsystem processor is configured to control the variable parasitic load to maintain a desired electrical power output from the machinery.

10. The apparatus of claim 9, wherein the machinery comprises turbomachinery configured to rotate about the axis and convert mechanical input power (16) into the electrical power for the vehicle.

11. The apparatus of claim 10, wherein the power subsystem processor is configured to control the mechanical input power to the turbomachinery to cause the change in rotation of the turbomachinery.

12. The apparatus of claim 9, wherein the vehicle comprises a spacecraft.

## Patentansprüche

1. Verfahren zur Steuerung der Fahrzeug-Lage unter Verwendung rotierender Maschinen-Einrichtungen (10, 12, 14), die eine andere Hauptfunktion haben, wobei das Verfahren Folgendes umfasst:
Versetzen der Maschinen-Einrichtungen in eine Drehung um eine Achse in dem Fahrzeug mit einer Drehgeschwindigkeit, die zur Erzeugung elektrischer Leistung für das Fahrzeug erforderlich ist;
Ändern der Drehgeschwindigkeit der Maschine; und
als Ergebnis der Änderung der Drehgeschwindigkeit der Maschinen-Einrichtungen, Austauschen eines Momentes mit dem Fahrzeug und Hervorrufen einer Winkelbewegung des Fahrzeuges um die gleiche Achse des Fahrzeuges,
wobei das Verfahren **gekennzeichnet ist durch**:
Ändern der elektrischen Last (20), die mit den rotierenden Maschinen-Einrichtungen gekoppelt ist, um einen gewünschten elektrischen Ausgang aufrecht zu erhalten, während der Schritt des Änderung der Drehgeschwindigkeit erfolgt.

2. Verfahren nach Anspruch 1, bei dem der Schritt des Versetzens der Maschinen-Einrichtungen in eine Drehung das Drehen einer Turbomaschine um die Achse in dem Fahrzeug mit einer Drehgeschwindigkeit derart umfasst, dass die elektrische Leistung für das Fahrzeug erzeugt wird.

3. Verfahren nach Anspruch 2, das weiterhin Folgendes umfasst:
Messen der Winkelposition und Rate des Fahrzeuges um die Achse;
Bestimmen der Drehgeschwindigkeits-Änderung, die erforderlich ist, um eine gewünschte Winkelbewegung des Fahrzeuges hervorzurufen.

4. Verfahren nach Anspruch 3, das weiterhin Folgendes umfasst:
Einstellen der mechanischen Eingangsleistung (16) an die Turbomaschine zum Bewirken der Änderung der Drehgeschwindigkeit.

5. Verfahren nach Anspruch 1, bei dem der Schritt des Änderns der mit den rotierenden Maschinen-Einrichtungen gekoppelten elektrischen Last den Schritt des Steuerns einer variablen parasitären Last (20) zur Aufrechterhaltung des gewünschten elektrischen Ausganges umfasst.

6. Verfahren nach Anspruch 5, bei dem der Schritt des Steuerns der veränderlichen parasitären Last die Vergrößerung der variablen parasitären Last und die Ableitung von Energie, die sich aus einer überschüssigen elektrischen Last ergibt, als Wärme umfasst.

7. Verfahren nach Anspruch 1, bei dem:
der Schritt des Drehens der Maschinen-Einrichtungen das Drehen eines ersten Satzes einer Maschinen-Einrichtung in einer Richtung und die Drehung eines zweiten Satzes der Maschinen-Einrichtung in einer entgegengesetzten Richtung umfasst; und
der Schritt des Änderns der Drehgeschwindigkeit ein Ändern der Drehgeschwindigkeit eines der Sätze der Maschinen-Einrichtung gegenüber der Drehzahl des anderen Satzes der Maschinen-Einrichtung umfasst.

8. Verfahren nach Anspruch 1, bei dem das Fahrzeug ein Raumfahrzeug ist.

9. Vorrichtung, die Maschinen-Einrichtungen (10, 12, 14) umfasst, die zur Drehung um eine Achse zur Erzeugung elektrischer Leistung für ein Fahrzeug konfiguriert sind;
wobei die Vorrichtung Folgendes umfasst:
einen Flug-Prozessor (30) zur Lagen-Einstellung des Fahrzeuges,
einen Leistungs-Teilsystem-Prozessor (32), der mit den Maschinen-Einrichtungen und dem Flug-Prozessor gekoppelt ist;
wobei der Flug-Prozessor so konfiguriert ist, dass er Steuersignale an den Leistungs-Teilsystem-Prozessor sendet, um eine Änderung der Drehung der Maschinen-Einrichtungen hervorzurufen, wobei die Änderung der Drehung der Maschinen-Einrichtungen eine gewünschte Änderung von einem oder mehreren von Folgendem hervorruft:
Lagen-Position des Fahrzeuges um die Achse; und
Änderungsgeschwindigkeit der Lagen-Position des Fahrzeuges um die Achse;
wobei die Änderung der Drehung der Maschinen-Einrichtungen eine Änderung der von den Maschinen-Einrichtungen gelieferten Leistung hervorruft;
**gekennzeichnet durch** eine veränderbare parasitäre Last (20), die zur Absorption überschüssiger elektrischer Leistung von den Maschinen-Einrichtungen konfiguriert ist;
wobei der Leistungs-Teilsystem-Prozessor (32) mit der veränderbaren parasitären Last gekoppelt ist;
wobei der Leistungs-Teilsystem-Prozessor so konfiguriert ist, dass er die veränderbare parasitäre Last steuert, um eine gewünschte elektrische Ausgangsleistung von den Maschinen-Einrichtungen aufrecht zu erhalten.

10. Vorrichtung nach Anspruch 9, bei der die Maschinen-Einrichtungen eine Turbomaschine umfassen, die für eine Drehung um die Achse und zur Umwandlung mechanischer Eingangsleistung (16) in elektrische Leistung für das Fahrzeug konfiguriert ist.

11. Vorrichtung nach Anspruch 10, bei der der Leistungs-Teilsystem-Prozessor so konfiguriert ist, dass er die mechanische Eingangsleistung an die Turbomaschine steuert, um eine Änderung der Drehung der Turbomaschine hervorzurufen.

12. Vorrichtung nach Anspruch 9, bei der das Fahrzeug ein Raumfahrzeug ist.

## Revendications

1. Procédé pour commander l'assiette d'un véhicule en utilisant une machinerie rotative (10, 12, 14) ayant une fonction principale différente, le procédé comprenant les étapes consistant à :
faire tourner une machinerie autour d'un axe dans le véhicule à une vitesse de rotation requise pour générer une puissance électrique pour le véhicule ;
changer la vitesse de rotation de la machinerie ; et
en résultat du changement de la vitesse de rotation de la machinerie, échanger un moment cinétique avec le véhicule et inclure un mouvement angulaire du véhicule autour du même axe du véhicule ;
le procédé étant **caractérisé par** l'étape consistant à :
faire varier une charge électrique (20) couplée à la machinerie rotative de façon à maintenir un rendement de sortie électrique souhaité tandis que l'étape de changement de la vitesse de rotation est accomplie.

2. Procédé selon la revendication 1, dans lequel l'étape consistant à faire tourner une machinerie comprend l'étape consistant à faire tourner une turbo machinerie autour de l'axe dans le véhicule à la vitesse de rotation de façon à générer la puissance électrique pour le véhicule.

3. Procédé selon la revendication 2, et comprenant par ailleurs les étapes consistant à :
détecter une position angulaire et une vitesse angulaire du véhicule autour de l'axe ;
déterminer un changement de la vitesse de rotation requis afin d'induire un mouvement angulaire souhaité du véhicule.

4. Procédé selon la revendication 3, et comprenant par ailleurs l'étape consistant à :
régler une puissance d'entrée mécanique (16) pour la turbo machinerie de façon à provoquer le changement de la vitesse de rotation.

5. Procédé selon la revendication 1, dans lequel l'étape consistant à faire varier une charge électrique couplée à la machinerie rotative comprend l'étape consistant à contrôler une charge parasite variable (20) de façon à maintenir le rendement de sortie électrique souhaité.

6. Procédé selon la revendication 5, et dans lequel l'étape consistant à contrôler la charge parasite variable comprend l'étape consistant à augmenter la charge parasite variable et à dissiper une énergie appartenant à une charge électrique en excédent sous la forme de chaleur.

7. Procédé selon la revendication 1, dans lequel :
l'étape consistant à faire tourner une machinerie comprend l'étape consistant à faire tourner un premier ensemble de machinerie dans une direction, et à faire tourner un second ensemble de machinerie dans une direction opposée: et
l'étape consistant à changer la vitesse de rotation comprend l'étape consistant à changer la vitesse de l'un des ensembles de machinerie relativement à la vitesse de l'autre ensemble de machinerie.

8. Procédé selon la revendication 1, dans lequel le véhicule comprend un engin spatial.

9. Appareil comprenant : une machinerie (10, 12, 14) qui est configurée pour tourner autour d'un axe de façon à générer une puissance électrique pour un véhicule ;
l'appareil comprenant :
un dispositif de contrôle de vol (30) pour régler l'assiette du véhicule ;
un dispositif de commande de sous-système de puissance (32) qui est couplé à la machinerie et au dispositif de contrôle de vol ;
dans lequel le dispositif de contrôle de vol est configuré pour transmettre des signaux de commande au dispositif de commande de sous-système de puissance dans le but de provoquer un changement dans la rotation de la machinerie, dans lequel le changement dans la rotation de la machinerie provoque un changement souhaité dans l'un ou plusieurs de :
une position d'assiette du véhicule autour de l'axe ; et
une vitesse de changement de la position d'assiette du véhicule autour de l'axe ;
dans lequel le changement dans la rotation de la machinerie provoque un changement dans la puissance électrique fournie par la machinerie ;
**caractérisé par** une charge parasite variable (20) qui est configurée pour absorber un excédent de puissance électrique en provenance de la machinerie ;
le dispositif de commande de sous-système de puissance (32) étant couplé à la charge parasite variable ;
dans lequel le dispositif de commande de sous-système de puissance est configuré pour contrôler la charge parasite variable de façon à maintenir un rendement de sortie de puissance électrique souhaité de la machinerie.

10. Appareil selon la revendication 9, dans lequel la machinerie comprend une turbo machinerie configurée pour tourner autour de l'axe et pour convertir une puissance d'entrée mécanique (16) en la puissance électrique pour le véhicule.

11. Appareil selon la revendication 10, dans lequel le dispositif de commande de sous-système de puissance est configuré pour contrôler la puissance d'entrée mécanique fournie à la turbo machinerie de façon à provoquer le changement dans la rotation de la turbo machinerie

12. Appareil selon la revendication 9, dans lequel le véhicule comprend un engin spatial.
